# FASCICULE DE BREVET EUROPEEN

(11) **EP 4 107 395 B1**
(45) Date de publication et mention de la délivrance du brevet: **11.09.2024**
(21) Numéro de dépôt: 20790340.2
(22) Date de dépôt: 21.10.2020
(51) Int. Cl.: F04B 3/00, F04B 15/08, F04B 23/02, F04B 53/12, F04B 7/04

(54) **APPAREIL DE COMPRESSION ET STATION DE REMPLISSAGE COMPRENANT UN TEL APPAREIL**
VERDICHTUNGSGERÄT UND BEFÜLLSTATION MIT EINEM SOLCHEN GERÄT
COMPRESSION APPARATUS AND FILLING STATION COMPRISING SUCH AN APPARATUS

(30) Priorité: 21.02.2020 FR 2001724
(43) Date de publication de la demande: 28.12.2022
(73) Titulaire: L'AIR LIQUIDE, SOCIÉTÉ ANONYME POUR L'ÉTUDE ET L'EXPLOITATION DES PROCÉDÉS GEORGES CLAUDE, 75007 Paris (FR)
(72) Inventeur: BENISTAND-HECTOR, Cyril, 38360 SASSENAGE (FR); PETITPAS, Guillaume, 38360 SASSENAGE (FR)
(74) Mandataire: Air Liquide
(86) Numéro de dépôt international: PCT/EP2020/079581
(87) Numéro de publication internationale: WO 2021/164899

(56) Documents cités:
- FR-A1- 2 406 736
- US-A- 2 880 927
- US-A- 3 136 136
- US-A- 4 369 633
- US-A- 5 511 955
- US-B2- 7 410 348

## Description

L'invention concerne un appareil de compression de fluide cryogénique ainsi qu'une station de remplissage comprenant un tel appareil.

L'invention concerne plus particulièrement un appareil de compression de fluide à plusieurs étages de compression comprenant une première chambre de compression, une seconde chambre de compression, un système d'admission communiquant avec la première chambre de compression configuré pour permettre l'entrée de fluide à comprimer dans ladite première chambre de compression, un système de transfert communiquant avec la première et la seconde chambre de compression et configuré pour permettre le transfert de fluide de la première chambre de compression vers la seconde chambre de compression, un piston mobile pour assurer la compression du fluide dans les première et seconde chambres de compression, l'appareil comprenant en outre un orifice d'évacuation communiquant avec la seconde chambre de compression et configuré pour permettre la sortie de fluide comprimé, la seconde chambre de compression étant délimitée par une portion du corps du piston et une paroi fixe de l'appareil, le piston étant mobile en translation selon une direction longitudinale.

L'invention concerne en particulier un appareil de compression ou de pompage de gaz et/ou liquides cryogéniques.

Dans la suite, notamment les termes « appareil de compression », « pompe » peuvent être utilisés indistinctement de même que pour les termes « pompage » et « compression ». L'appareil objet de l'invention concerne en effet un appareil de pompage et/ou de compression de fluide cryogénique liquide et/ou gazeux et/ou supercritique.

Les fluides cryogéniques présentent des densités beaucoup plus élevées que les fluides gazeux. Par conséquent, les pompes cryogéniques (par opposition aux compresseurs à gaz) offrent des débits massiques plus importants, un volume plus petit, consomment moins d'énergie et nécessitent moins d'entretien. C'est pourquoi les pompes cryogéniques sont utilisées dans de nombreux domaines tels que les unités de séparation des gaz de l'air, les reformeurs, les stations de remplissage, les secteurs maritimes.

Les fluides concernés comprennent généralement l'oxygène, l'azote, le gaz naturel, l'argon, l'hélium ou l'hydrogène. Ces appareils de compression (ou pompes) ont pour fonction de pressuriser un fluide cryogénique à un débit cible.

Par exemple, une pompe à piston cryogénique peut être placée directement en ligne à la sortie du stockage source cryogénique ou encore dans un bain cryogénique dédié (également appelé "sump" en anglais), situé à côté et directement alimenté par un réservoir de stockage principal.

Pour diverses raisons, notamment la commodité de l'entretien et de la conception, généralement la pompe cryogénique est à mouvement alternatif et est insérée dans un réservoir de sorte à être immergée dans le fluide cryogénique à pomper.

Les pompes cryogéniques ont généralement des pressions d'entrée comprises entre 1 et 12 bars et des pressions de sortie de 20 à 1000 bar, selon l'application. Les pompes peuvent comporter un ou plusieurs étages de compression en utilisant un mouvement de va-et-vient.

Un mécanisme à deux étages de compression est souvent préféré car celui-ci permet de découpler la phase d'admission (pendant laquelle le fluide doit être aussi dense et donc aussi froid que possible) et la phase de pressurisation (où des quantités de chaleur néfastes pour le procédé peuvent être générées). Les principaux indicateurs de performance des pompes cryogéniques à piston sont : le rendement volumétrique, les pertes par évaporation, la consommation d'énergie, l'empreinte au sol et la durabilité.

Les principales caractéristiques des pompes cryogéniques à mouvement alternatif devraient donc être :
- une densité la plus élevée possible à l'aspiration,
- une très bonne isolation thermique avec l'environnement,
- un volume mort minimal (donc un taux de compression élevé),
- un montage simple et robuste pour une maintenance rapide et une fiabilité élevée,
- une bonne gestion des pertes par évaporation afin de limiter leur impact.

Le document FR 2 406 736 A1 divulgue un appareil de compression de fluide à plusieurs étages de compression. Cependant, le dispositif de ce document ne comprend pas un système d'admission comportant une ou plusieurs lumières assurant ou non une communication entre une première chambre de compression et un bain de fluide cryogénique à l'extérieur selon la position longitudinale du piston.

Le document US7410348 décrit une pompe à deux étages de compression à piston horizontale avec une admission axiale par un clapet anti-retour et une décharge radiale. Cette architecture présente un volume mort conséquent. De plus, les pertes de fuites sont relativement importantes au niveau de deux systèmes de joints à haute pression situés de part et d'autre de la chambre à haute pression.

Ceci provoque également un montage et un entretien plus difficiles.

Un but de la présente invention est de pallier tout ou partie des inconvénients de l'art antérieur relevés ci-dessus.

A cette fin, la présente invention propose un appareil de compression de fluide à plusieurs étages de compression tel que défini par les revendications annexées.

Cet appareil de compression, par ailleurs conforme à la définition générique qu'en donne le préambule ci-dessus, est essentiellement caractérisé en ce que le piston comporte une portion tubulaire montée autour d'un guide central fixe, une extrémité terminale du guide central formant la paroi fixe délimitant une partie de la seconde chambre de compression, l'appareil comprenant un système d'étanchéité formé entre le guide central et le piston, selon la direction longitudinale de translation du piston, le système d'admission étant situé à une première extrémité de l'appareil, l'orifice d'évacuation étant situé à une seconde extrémité de l'appareil et le système de transfert est situé entre le système d'admission et l'orifice d'évacuation.

Par ailleurs, des modes de réalisation peuvent comporter l'une ou plusieurs des caractéristiques suivantes :
- une extrémité du piston forme une surface mobile de compression du fluide dans la première chambre de compression tandis que la portion tubulaire du piston forme une chemise mobile qui coopère avec l'extrémité terminale du guide central pour former un système à compression du fluide dans la seconde chambre de compression dans lequel l'extrémité terminale du guide central forme un piston fixe,
- en configuration de fonctionnement, la direction longitudinale de translation du piston est verticale ou inclinée, le système d'admission étant situé à une extrémité inférieure de l'appareil, l'orifice d'évacuation étant situé dans une partie de l'appareil située au-dessus du système d'admission et de préférence au-dessus du système de transfert,
- l'intégralité de la seconde chambre de compression est contenue dans la portion tubulaire du piston,
- selon la direction longitudinale, une première extrémité de la seconde chambre de compression est délimitée par une première extrémité du piston tubulaire et une seconde extrémité de la seconde chambre de compression est délimitée par l'extrémité terminale du guide central et le système d'étanchéité formé entre le guide central et le piston, ledit le système d'étanchéité étant situé au niveau ou adjacent à l'extrémité terminale du guide central,
- le système d'étanchéité formé entre le guide central et le piston est situé uniquement au niveau de la seconde extrémité de la seconde chambre de compression et/ou au-delà la seconde chambre de compression de façon opposée à la première extrémité de l'appareil selon la direction longitudinale,
- l'orifice d'évacuation est situé au niveau de l'extrémité terminale du guide central, l'appareil comprenant une conduite d'évacuation du gaz comprimé comprenant une première extrémité reliée à l'orifice d'évacuation et une seconde extrémité située de façon opposée à la première extrémité de l'appareil,
- la première chambre de compression est délimitée par une première cavité fixe, une extrémité du piston et un système d'étanchéité formé entre le piston et une paroi de la première cavité,
- le système d'admission est situé à une extrémité de la première cavité opposée à la seconde extrémité de l'appareil,
- le système d'admission comprend au moins l'un parmi: un ou plusieurs clapets anti-retour, un ou plusieurs orifices ou lumière(s), au moins un clapet à disque plat ou vanne(s) configurés pour assurer l'entrée de fluide à comprimer dans la première chambre de compression lors d'une phase d'admission et empêcher la sortie de fluide en phase de compression,
- une portion de paroi fixe délimitant la première chambre de compression comprend une ou plusieurs lumières ou orifices agencés de préférence selon la direction longitudinale pour assurer ou non une communication entre la première chambre de compression et l'extérieur selon la position longitudinale du piston,
- la compression du fluide dans la seconde chambre de compression est provoquée par une course du piston en direction de la seconde extrémité de l'appareil,
- l'appareil est logé dans une enceinte étanche contenant un bain de fluide cryogénique de refroidissement
- l'appareil comporte un circuit d'évacuation de fuite de gaz comprenant une première extrémité communiquant avec l'espace entre le piston et le guide central et une seconde extrémité débouchant au niveau de la seconde extrémité de l'appareil.

L'invention concerne également une station de remplissage de réservoirs de gaz sous pression comprenant une source de gaz liquéfié, notamment d'hydrogène liquéfié, un circuit de soutirage ayant une première extrémité reliée à la source et au moins une seconde extrémité destinée à être raccordée à un réservoir à remplir, le circuit de soutirage comprenant un appareil de pompage ou un appareil de compression de fluide conforme à l'une quelconque des caractéristiques ci-dessus ou ci-dessous.

D'autres particularités et avantages apparaîtront à la lecture de la description ci-après, faite en référence aux figures dans lesquelles :
[Fig. 1] représente une vue en coupe longitudinale et verticale, schématique et partielle, illustrant la structure d'un exemple de réalisation d'un appareil de compression selon l'invention,
[Fig. 2] représente une vue en coupe longitudinale et verticale, schématique et partielle, illustrant une première configuration d'un cycle de fonctionnement de l'appareil de compression selon l'invention,
[Fig. 3] représente une vue en coupe longitudinale et verticale, schématique et partielle, illustrant une seconde configuration d'un cycle de fonctionnement de l'appareil de compression selon l'invention,
[Fig. 4] représente une vue en coupe longitudinale et verticale, schématique et partielle, illustrant une troisième configuration d'un cycle de fonctionnement de l'appareil de compression selon l'invention,
[Fig. 5] représente une vue en coupe longitudinale et verticale, schématique et partielle, illustrant une quatrième configuration d'un cycle de fonctionnement de l'appareil de compression selon l'invention,
[Fig. 6] représente une vue en coupe longitudinale et verticale, schématique et partielle, illustrant une cinquième configuration d'un cycle de fonctionnement de l'appareil de compression selon l'invention,
[Fig. 7] représente une vue en coupe longitudinale et verticale, schématique et partielle, illustrant la structure d'un autre exemple de réalisation d'un appareil de compression selon l'invention,
[Fig. 8] représente une vue en coupe longitudinale et verticale, schématique et partielle, illustrant la structure d'encore un autre exemple de réalisation d'un appareil de compression selon l'invention,

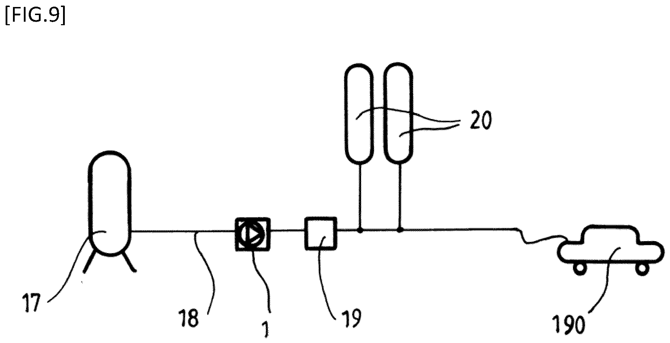

[Fig. 9] représente une vue schématique et partielle, illustrant un exemple de station de remplissage utilisant un tel appareil de compression.

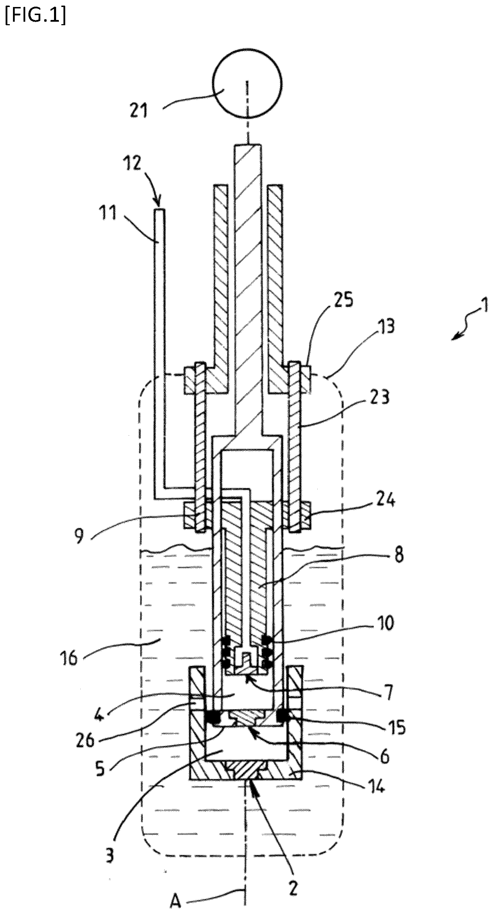

L'appareil 1 de compression de fluide représenté à la [Fig. 1] comprend deux étages de compression en série.

L'appareil 1 comprend en particulier une première chambre 3 de compression (à relative basse pression) et une seconde chambre 4 de compression (à relative haute pression).

L'appareil 1 comprend un système 2 d'admission communiquant avec la première chambre 3 de compression et qui est configuré pour permettre l'entrée de fluide à comprimer dans ladite première chambre 3 de compression. Le système 2 d'admission peut comprendre par exemple au moins l'un parmi : un ou plusieurs clapets anti-retour, un ou plusieurs orifices ou lumière(s), au moins un clapet à disque plat ou tout autre dispositif ou vanne permettant l'entrée de fluide à comprimer dans la première chambre 3 de compression lors d'une phase d'admission et empêchant la sortie de fluide en phase de compression. En particulier, ce système 2 (clapet(s) et/ou autre) s'ouvre en cas de différentiel de pression déterminé entre ses deux extrémités. De plus, la première chambre 3 peut éventuellement être équipée d'une soupape ou autre élément de sécurité configuré pour limiter la pression au sein de la chambre en dessous d'un seuil de sécurité déterminé.

L'appareil 1 comprend également un système 6 de transfert anti-retour communiquant avec la première 3 et la seconde 4 chambre de compression et configuré pour permettre le transfert de fluide de la première chambre 3 de compression vers la seconde 4 chambre de compression (lors et/ou en fin de phase de compression du fluide dans la première chambre 3 de compression) mais qui reste fermé lors de la phase de compression dans la seconde chambre 4 de compression. Ce système 6 de transfert peut être du même type que celui du système 2 d'admission.

L'appareil 1 comprend un piston 5 mobile en translation pour assurer la compression du fluide dans les première 3 et seconde 4 chambres de compression (comme détaillé ci-après).

L'appareil 1 comprend en outre un orifice 7 d'évacuation communiquant avec la seconde chambre 4 de compression et configuré pour permettre la sortie de fluide comprimé dans la seconde chambre 4 de compression (pendant ou en fin de phase de compression dans cette chambre). L'orifice 7 d'évacuation peut être pourvu d'un système anti-retour qui peut être du même type que celui du système 2 d'admission (par exemple fermé tant que le différentiel de pression entre la seconde chambre 4 de compression et l'extérieur est inférieur à un seuil déterminé).

La seconde 4 chambre de compression est délimitée par une portion du corps du piston 5 et une paroi fixe de l'appareil. Le piston 5 est mobile en translation selon une direction A longitudinale.

Comme illustré, le piston 5 comporte une portion tubulaire montée autour d'un guide 8 central fixe. Une extrémité terminale du guide 8 central forme une paroi fixe délimitant une partie de la seconde chambre 4 de compression. L'appareil 1 comprend un système d'étanchéité 10 formé entre le guide 8 central et le piston 5 (segment(s), joint(s) ou autre).

Selon la direction A longitudinale de translation du piston 5, le système 2 d'admission est situé à une première extrémité de l'appareil 1, l'orifice 7 d'évacuation étant situé à une seconde extrémité de l'appareil et le système 6 de transfert est situé entre le système 2 d'admission et l'orifice 7 d'évacuation. C'est-à-dire que les orifices de passage 2, 6 et 7 du fluide sont disposés en série dans cet ordre qui correspond à une température croissante du fluide dans l'appareil 1 de compression (froid à l'admission dans la première chambre 3 de compression, plus chaud dans la seconde chambre 4 de compression et encore plus chaud en sortie de cette seconde chambre 4 de compression).

Comme illustré, une extrémité du piston 5 forme une surface mobile de compression du fluide dans la première 3 chambre de compression tandis que la portion tubulaire du piston 5 forme une chemise mobile qui coopère avec l'extrémité terminale du guide 8 central pour former un système à compression du fluide dans la seconde 4 chambre de compression (dans ce second étage de compression l'extrémité terminale du guide 8 central forme ainsi un piston fixe coopérant avec une chemise mobile).

Comme illustré, en configuration de fonctionnement, la direction A longitudinale de translation du piston (5) est de préférence verticale ou inclinée de sorte que le système 2 d'admission est situé à une extrémité inférieure de l'appareil 1, l'orifice 7 d'évacuation étant situé dans une partie de l'appareil située au-dessus du système 2 d'admission et de préférence au-dessus du système 6 de transfert.

Ce mode de réalisation préféré va être décrit plus en détail ci-après. Cependant, bien entendu, en variante l'axe A longitudinal pourrait être horizontal en configuration de fonctionnement ou incliné pour inverser les positions verticales relatives décrites ci-dessus.

Ainsi, lorsque la direction A longitudinale de translation du piston 5 est verticale, le système 2 d'admission peut être situé à une extrémité inférieure de l'appareil 1. L'orifice 7 d'évacuation est situé quant à lui dans une partie supérieure de l'appareil 1, c'est-à-dire au-dessus du système 2 d'admission.

Cette configuration assure une admission de fluide à comprimer dans la partie inférieure, c'est-à-dire dans la région la plus froide de l'appareil 1. De plus, le refoulement et les éventuelles fuites sont localisées dans la région supérieure de l'appareil (plus chaude). Cette configuration favorise un mélange minimal ou nul entre les deux régions relativement froide et chaude. De plus, les fluides chauds sont déportés dans la partie supérieure qui peut comporter le mécanisme d'actionnement 21 du piston et qui génère de la chaleur.

Cet agencement vertical avec course de compression verticale permet une bonne séparation des flux de fluide relativement froid (à l'admission) et chaud (à l'échappement). En particulier, la course de compression dans la seconde chambre 4 de compression est ascendante (traction de la tige du piston 5 vers le haut et vers la partie chaude de l'appareil 1).

En particulier, cette course ascendante du piston 5 lors de la compression à haute pression génère un effort de traction sur la tige du piston 5. Ceci est favorable mécaniquement. En effet, la tige n'est pas soumise au flambement lors de cette traction (au contraire d'une compression/ poussée). De plus, cet agencement de compression en traction ne nécessite pas de guider la tige de piston régulièrement sur sa longueur. Ceci permet en outre de réduire la surface de la section de la tige de piston (en évidant la tige ou en réduisant son diamètre par exemple). De plus, ceci permet de réduire la longueur de la tige de piston selon le niveau de pertes thermiques acceptable.

Comme schématisé, le piston 5 peut être entraîné par un organe moteur 21 ou un mécanisme d'entraînement relié à un organe moteur situé en partie supérieure ou déporté.

Comme illustré, la première chambre 3 de compression peut être formée dans une cavité 14 tubulaire ou chambre fixe qui est close à son extrémité inférieure. La première chambre 3 de compression peut être délimitée ainsi en partie inférieure par cette cavité 14 inférieure fixe. Le système 2 d'admission peut être situé à une extrémité inférieure de la cavité 14 inférieure.

La première chambre 3 de compression peut être délimitée ainsi en partie supérieure par une extrémité inférieure du piston 5 et un système d'étanchéité 15 (segments ou autre) formé entre le piston 5 et une paroi de la cavité 14 inférieure.

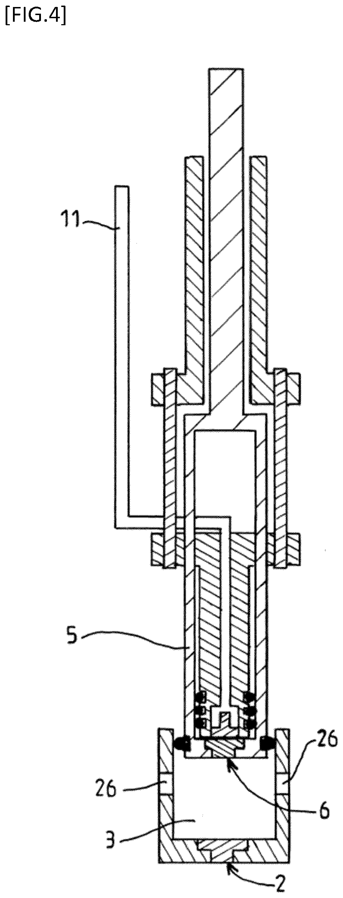

De préférence, la partie inférieure du piston 5 a un profil configuré pour favoriser l'échappement du gaz par les lumières ou clapets. Par exemple, comme schématisé notamment à la [Fig. 4] une ou plusieurs lumières 26 (ou orifices) peuvent être ménagées dans la partie supérieure de la cavité 14 inférieure (ou toute portion de paroi fixe délimitant au moins une partie de la première chambre de compression). Ces lumières 26 permettent, lorsque le piston 5 les découvre (piston 5 au-dessus d'au moins une partie des lumières 26) la communication entre la première chambre 3 de compression et l'extérieur. Ainsi, en phase d'admission (agrandissement de la chambre 3), du gaz éventuellement présent dans la première chambre 3 de compression peut s'échapper par ces lumières 26 et laisser sa place à du liquide du bain environnant. Ceci assure un remplissage totalement liquide à l'admission. De plus, en phase de compression (piston 5 plongeant dans la seconde chambre 3 de compression) ces lumières 26 laissent échapper le surplus de liquide en dosant le volume de liquide qui y sera emprisonné (ce volume peut être déterminé par la position longitudinale des lumières 26). Puis le piston 5 continue sa course de compression dans la première chambre 3 de compression et les lumières 26 ne communiquent plus avec le volume comprimé (qui est isolé du bain 16) .

A noter que ces lumières 26 ou orifices peuvent faire partie ou peuvent même constituer le système d'admission de fluide dans la première chambre 3 de compression. C'est-à-dire que, le système de clapet(s) 2 d'admission précité situé à une extrémité inférieure de la cavité 14 inférieure pourrait être éventuellement omis et l'admission de fluide dans la première chambre 3 de compression pourrait être assuré dans ce cas uniquement par les lumières 26 ou orifices précités.

Ainsi, la portion tubulaire du piston 5 forme une enceinte entourant toute la seconde chambre 4 de compression. Ainsi, la seconde chambre 4 de compression peut être contenue entièrement dans la portion tubulaire du piston 5. Ainsi le piston 5 peut constituer le carter de la seconde chambre 4 de compression. Cette architecture permet de confiner la seconde chambre 4 de compression entièrement dans le piston 5 dont les parois peuvent être thermalisées (c'est-à-dire maintenues en froid) efficacement comme décrit ci-après.

L'extrémité inférieure de la seconde chambre 4 de compression peut ainsi être délimitée par une extrémité inférieure du piston 5 tubulaire et l'extrémité supérieure de la seconde chambre 4 de compression peut être délimitée par l'extrémité terminale inférieure du guide 8 central et le système d'étanchéité 10 formé entre le guide 8 central et le piston 5.

A noter que ce système d'étanchéité 10 est situé au niveau ou au-dessus de l'extrémité inférieure du guide 8 central, au-dessus de l'extrémité supérieure de la seconde chambre 4 de compression.

Cette architecture permet ainsi de prévoir un unique système d'étanchéité dynamique à haute pression à une seule extrémité de la seconde chambre 4 de compression. Ainsi, le système d'étanchéité 10 formé entre le guide 8 central et le piston 5 peut être situé uniquement au niveau de l'extrémité supérieure de la seconde chambre 4 de compression et/ou au-dessus de la seconde chambre 4.

Au contraire, dans l'art antérieur mentionné précédemment, deux systèmes d'étanchéités haute pression dynamiques étaient prévus de part et d'autre de la chambre de compression à haute pression (de part et d'autre selon la direction de la course du piston).

Cet agencement réduit fortement les contraintes de fabrication, de maintenance et le risque de fuites par rapport à l'art antérieur.

Le système 6 de transfert est situé par exemple sur l'extrémité inférieure de la paroi tubulaire du piston 5 dont l'une des faces délimite l'extrémité supérieure de la première chambre 3 de compression. Comme précédemment, ce système 6 de transfert peut être unique ou multiple et peut avoir toute structure appropriée pour permettre le transfert de fluide de la première chambre 3 vers la seconde chambre 4 (en phase de compression dans la première chambre 3 de compression mais empêchant le transfert de fluide de la seconde chambre 4 vers la première chambre lors de la compression dans la seconde chambre 4).

L'orifice 7 d'évacuation peut être situé au niveau de l'extrémité inférieure du guide 8 central (extrémité supérieure fixe de la seconde chambre 4 de compression). L'appareil 1 peut comprendre une conduite 11 d'évacuation du gaz comprimé comprenant une première extrémité inférieure reliée à cet orifice 7 d'évacuation et une seconde extrémité supérieure située en partie supérieure de l'appareil 1 pour collecter le fluide à haute pression comprimé.

Comme illustré à la [Fig. 1], l'appareil de compression peut être logé dans une enceinte 13 étanche isolée thermiquement et contenant un bain 16 de fluide cryogénique de refroidissement. En particulier, la première 3 et la seconde 4 chambres de compression peuvent être immergées dans une phase liquide. La partie supérieure de l'enceinte 16 peut comporter un ciel gazeux qui récupère les éventuelles fuites dans l'appareil 1.

Ainsi, la tête froide de l'appareil 1 peut être immergée verticalement dans une bain 16 cryogénique (parfois appelé puisard).

La première chambre 3 de compression pourrait être fixée directement au fond du bain 16.

La partie mobile (piston 5) a un mouvement vertical (vers le haut et vers le bas). Des axes 22, 23 et plateaux 24, 25 de montage peuvent être prévus en dehors des chambres 3, 4 de compression pour le montage et permettre les mouvements de compression par rapport aux parties fixes.

Bien entendu la structure du piston 5 est conformée pour permettre dans ce cas le coulissement d'une partie (la partie arrière dans ce cas) du piston 5 dans le plateau 24 (ou autre (s)). Par exemple, la portion inférieure du piston 5 est tubulaire (et forme la seconde chambre 4 de compression) tandis que la partie opposée (supérieure) du piston 5 est conformée pour permettre le coulissement par rapport au plateau 24.

Par exemple, la partie supérieure du piston 5 comporte une ou des ouvertures permettant le passage du plateau 24). Le piston 5 peut être réalisé en une ou plusieurs pièces assemblées/solidarisées.

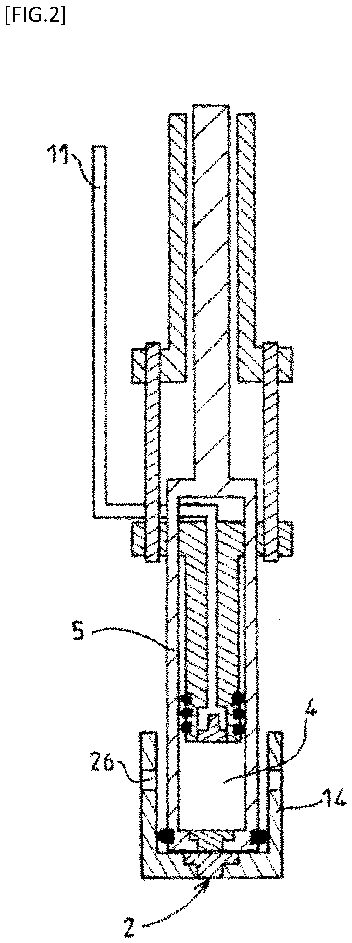

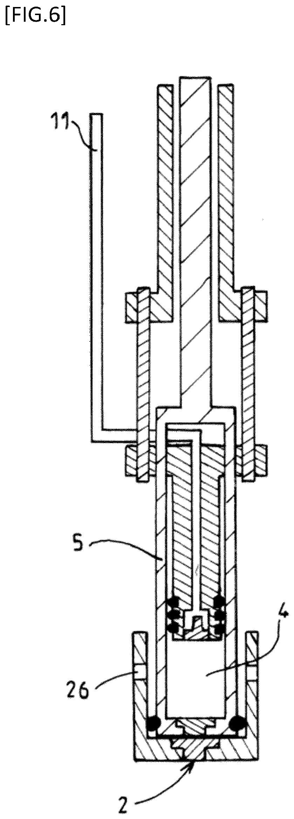

Un exemple de cycle de compression va à présent être décrit à liaison aux [Fig. 2] à [Fig. 6].

A la [Fig. 2] le piston 5 est en position extrême basse (première chambre 3 de compression vide et fluide à une pression par exemple comprise entre 2 et 20 bar dans la seconde chambre 4 de compression). Du fluide froid à basse pression (par exemple de 1 à 10 bar) situé au fond de l'enceinte 13 peut être admis dans la première chambre 3 de compression via le système 2 d'admission lors de la remontée du piston 5 (et le fluide est pressurisé dans la seconde chambre 4 de compression).

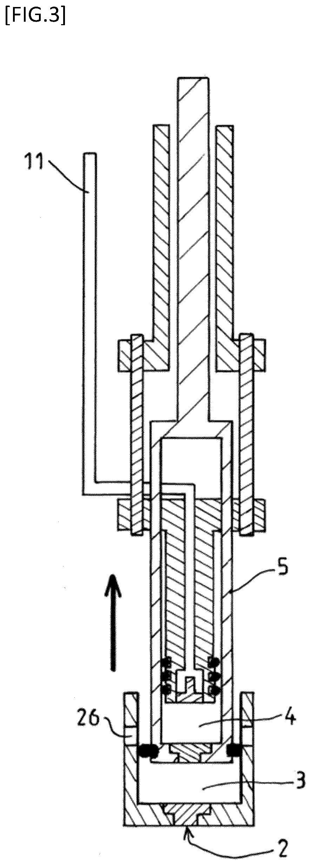

A mesure que le piston est remonté ([Fig. 3]), davantage de fluide remplit la première chambre 3 de compression. Le fluide dans la seconde chambre 4 de compression est comprimé. La première chambre 3 de compression est remplie. Lorsque la pression dans la seconde chambre 4 de compression devient supérieure à la pression déterminée en aval (par exemple 100 à 1000 bars, selon l'application), le système 7 d'évacuation s'ouvre, vidant les fluides à haute pression vers le haut via la conduite 11 d'évacuation.

En position extrême haute ([Fig. 4]), la seconde chambre 4 de compression est vidée et la première chambre 3 de compression est pleine.

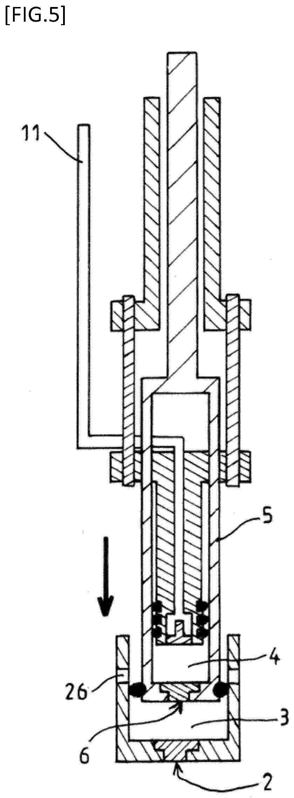

Après le point mort haut ([Fig. 5]), lors de la descente du piston 5 comme la pression de la seconde chambre 4 du cycle précédent diminue en dessous de la pression dans la première chambre 3 de compression, le fluide se déplace de la première chambre 3 de compression vers la seconde chambre 4 de compression via le système 6 de transfert ([Fig. 5]). La ou les lumières 26 communiquent avec la première chambre 3 de compression jusqu'à ce que le piston 5 passe par une position longitudinale basse déterminée. Lorsque la pression s'équilibre après le point mort bas, la seconde chambre 4 de compression est isolée.

L'appareil revient à la configuration de départ et peut recommencer un cycle ([Fig. 6]).

Cette architecture avec une course de compression et la séparation des parties froides (en bas) et chaude (en haut) permet un meilleur fonctionnement de la compression. La relative grande distance entre l'admission (de préférence en bas) et l'évacuation (de préférence en haut) favorise cet avantage.

En effet, l'admission de fluide est réalisée au niveau où le fluide est le plus froid et le plus dense tandis que les fluides plus chaud sont déportés vers le haut. Ceci minimise les risques de mélange et d'ébullition du bain 16. Les fluides chauds (fuites) peuvent être collectés directement en partie haute sans nécessité de tuyauterie dédiée.

L'ensemble peut être logé dans un carter.

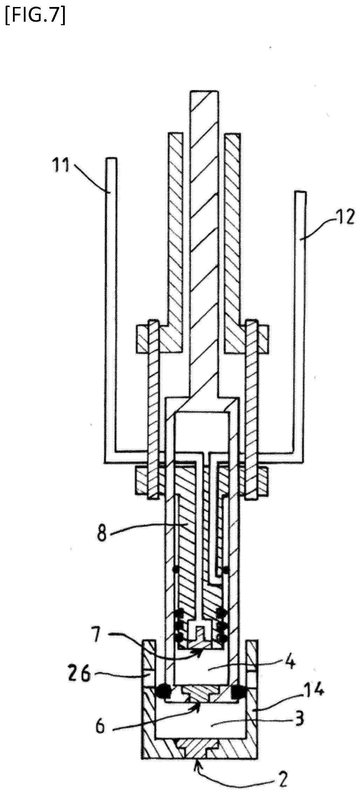

La [Fig. 7] illustre une variante où un circuit 12 d'évacuation de fuite de gaz facultatif est prévu. Par exemple le circuit 12 comprend une conduite ayant une première extrémité communiquant avec l'espace entre le piston 5 et le guide 8 central (au-dessus du système 10 d'étanchéité et éventuellement en dessous d'une étanchéité supérieure supplémentaire) et une seconde extrémité débouchant en partie supérieure de l'appareil 1.

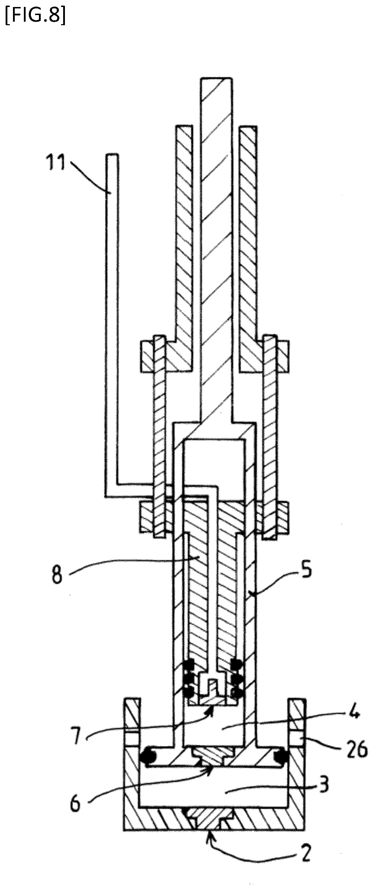

Dans la variante de la [Fig. 8], la géométrie de l'extrémité inférieure du piston 5 peut être adaptée pour modifier le rapport des volumes des deux chambres 3, 4 de compression, par exemple pour augmenter la taille de la première chambre 3 de compression par rapport à la seconde chambre 4 de compression.

Un appareil 1 de compression de ce type (ou plusieurs en série ou en parallèle) peut être utilisé dans toute installation cryogénique nécessitant de pomper ou comprimer un fluide cryogénique.

Par exemple, une station de remplissage de réservoirs de gaz sous pression (hydrogène par exemple) peut comprendre une source 17 de gaz liquéfié, un circuit 18 de soutirage ayant une première extrémité reliée à la source et au moins une seconde extrémité destinée à être raccordée à un réservoir 190 à remplir, le circuit 18 de soutirage comprenant un tel appareil 1 de pompage. Le fluide pompé peut être vaporisé dans un échangeur 19 en aval et éventuellement stocké dans un ou plusieurs réservoirs 20 tampon sous pression.

## Revendications

1. Appareil (1) de compression de fluide à plusieurs étages de compression comprenant une enceinte (13) étanche et contenant un bain (16) de fluide cryogénique comportant une phase liquide, la partie supérieure de l'enceinte (13) comportant un ciel gazeux, une première chambre (3) de compression, une seconde chambre (4) de compression, un système (2) d'admission communiquant avec la première chambre (3) de compression configuré pour permettre l'entrée de fluide à comprimer dans ladite première chambre (3) de compression, un système (6) de transfert communiquant avec la première (3) et la seconde (4) chambre de compression et configuré pour permettre le transfert de fluide de la première chambre (3) de compression vers la seconde (4) chambre de compression, un piston (5) mobile pour assurer la compression du fluide dans les première (3) et seconde (4) chambres de compression, l'appareil (1) comprenant en outre un orifice (7) d'évacuation communiquant avec la seconde chambre (4) de compression et configuré pour permettre la sortie de fluide comprimé, la seconde (4) chambre de compression étant délimitée par une portion du corps du piston (5) et une paroi fixe de l'appareil, le piston (5) étant mobile en translation selon une direction (A) longitudinale, le piston (5) comportant une portion tubulaire montée autour d'un guide (8) central fixe, une extrémité terminale du guide (8) central formant la paroi fixe délimitant une partie de la seconde chambre (4) de compression, l'appareil (1) comprenant un système d'étanchéité (10) formé entre le guide (8) central et le piston (5) et, selon la direction (A) longitudinale de translation du piston (5), le système (2) d'admission étant situé à une première extrémité de l'appareil (1), l'orifice (7) d'évacuation étant situé à une seconde extrémité de l'appareil et le système (6) de transfert est situé entre le système (2) d'admission et l'orifice (7) d'évacuation, la première (3) et la seconde (4) chambre de compression étant immergées dans la phase liquide du bain (16), le système d'admission comprenant une ou plusieurs lumières (26) assurant ou non une communication entre la première chambre (3) de compression et le bain (16) à l'extérieur selon la position longitudinale du piston (5).

2. Appareil selon la revendication 1 dans lequel la ou les lumières (26) sont agencées pour permettre, lorsque le piston (5) les dépasse, c'est-à-dire lorsque le piston (5) est situé au-delà d'au moins une partie de la ou des lumières (26), la communication entre la première chambre (3) de compression et le bain (16) extérieur.

3. Appareil selon la revendication 1 ou 2 dans lequel, en phase d'admission lorsque le volume de la première chambre (3) de compression s'agrandit, la ou les lumières (26) sont configurées pour permettre à du gaz éventuellement présent dans la première chambre (3) de compression de s'échapper par la ou les lumières (26) vers le bain (16) extérieur et laisser sa place à du liquide.

4. Appareil selon la revendication 2 ou 3 dans lequel, en phase de compression, c'est-à-dire lorsque le piston (5) diminue le volume de la première chambre (3) de compression, la ou les lumières (26) sont configurées pour laisser échapper le surplus de liquide et doser le volume de liquide emprisonné dans la première chambre (3) de compression à une valeur déterminée avant de ne plus communiquer avec la première chambre (3) de compression.

5. Appareil selon l'une quelconque des revendications 1 à 4, dans lequel une extrémité du piston (5) forme une surface mobile de compression du fluide dans la première (3) chambre de compression tandis que la portion tubulaire du piston (5) forme une chemise mobile qui coopère avec l'extrémité terminale du guide (8) central pour former un système à compression du fluide dans la seconde (4) chambre de compression dans lequel l'extrémité terminale du guide (8) central forme un piston fixe.

6. Appareil selon l'une quelconque des revendications 1 à 5, dans lequel, en configuration de fonctionnement, la direction (A) longitudinale de translation du piston (5) est verticale ou inclinée, le système (2) d'admission étant situé à une extrémité inférieure de l'appareil (1), l'orifice (7) d'évacuation étant situé dans une partie de l'appareil située au-dessus du système (2) d'admission et de préférence au-dessus du système (6) de transfert.

7. Appareil selon l'une quelconque des revendications 1 à 6 dans lequel l'intégralité de la seconde chambre (4) de compression est contenue dans la portion tubulaire du piston (5) .

8. Appareil selon l'une quelconque des revendications 1 à 7, dans lequel, selon la direction (A) longitudinale, une première extrémité de la seconde chambre (4) de compression est délimitée par une première extrémité du piston (5) tubulaire et une seconde extrémité de la seconde chambre (4) de compression est délimitée par l'extrémité terminale du guide (8) central et le système d'étanchéité (10) formé entre le guide (8) central et le piston (5), ledit système d'étanchéité (10) étant situé au niveau ou adjacent à l'extrémité terminale du guide (8) central.

9. Appareil selon l'une quelconque des revendications 1 à 8, dans lequel le système d'étanchéité (10) formé entre le guide (8) central et le piston (5) est situé uniquement au niveau de la seconde extrémité de la seconde chambre (4) de compression et/ou au-delà la seconde chambre (4) de compression de façon opposée à la première extrémité de l'appareil (1) selon la direction (A) longitudinale.

10. Appareil selon l'une quelconque des revendications 1 à 9, dans lequel l'orifice (7) d'évacuation est situé au niveau de l'extrémité terminale du guide (8) central, l'appareil (1) comprenant une conduite (11) d'évacuation du gaz comprimé comprenant une première extrémité reliée à l'orifice (7) d'évacuation et une seconde extrémité située de façon opposée à la première extrémité de l'appareil (1).

11. Appareil selon l'une quelconque des revendications 1 à 10, dans lequel la première chambre (3) de compression est délimitée par une première cavité (14) fixe, une extrémité du piston (5) et un système d'étanchéité (15) formé entre le piston (5) et une paroi de la première cavité (14).

12. Appareil selon la revendication 11, dans lequel le système (2) d'admission est situé à une extrémité de la première cavité (14) opposée à la seconde extrémité de l'appareil (1) .

13. Appareil selon l'une quelconque des revendications 1 à 12, dans lequel le système (2) d'admission comprend au moins l'un parmi: un ou plusieurs clapets anti-retour, au moins un clapet à disque plat ou vanne(s) configurés pour assurer l'entrée de fluide à comprimer dans la première chambre (3) de compression lors d'une phase d'admission et empêcher la sortie de fluide en phase de compression.

14. Appareil selon l'une quelconque des revendications 1 à 13, dans lequel la compression du fluide dans la seconde chambre (4) de compression est provoquée par une course du piston (5) en direction de la seconde extrémité de l'appareil (1).

15. Station de remplissage de réservoirs ou de conduites de gaz sous pression comprenant une source (17) de gaz liquéfié, notamment d'hydrogène liquéfié, un circuit (18) de soutirage ayant une première extrémité reliée à la source et au moins une seconde extrémité destinée à être raccordée à un réservoir (190) à remplir, le circuit (18) de soutirage comprenant un appareil (1) de compression de fluide conforme à l'une quelconque des revendications 1 à 14.

## Patentansprüche

1. Fluidverdichtungsgerät (1) mit mehreren Verdichtungsstufen, umfassend ein dichtes und ein Bad (16) von eine flüssige Phase aufweisendem kryogenem Fluid enthaltendes Gehäuse (13), wobei der obere Teil des Gehäuses (13) einen Kopfgasraum aufweist, eine erste Verdichtungskammer (3), eine zweite Verdichtungskammer (4), ein mit der ersten Verdichtungskammer (3) in Verbindung stehendes Einlasssystem (2), das dafür ausgelegt ist, den Eintritt von zu verdichtendem Fluid in die erste Verdichtungskammer (3) zu ermöglichen, ein Überleitungssystem (6), das mit der ersten (3) und der zweiten (4) Verdichtungskammer in Verbindung steht und dafür ausgelegt ist, die Überleitung von Fluid von der ersten Verdichtungskammer (3) zur zweiten Verdichtungskammer (4) zu ermöglichen, einen beweglichen Kolben (5) zum Sicherstellen der Verdichtung des Fluids in der ersten (3) und zweiten (4) Verdichtungskammer, wobei das Gerät (1) außerdem eine Auslassöffnung (7) umfasst, die mit der zweiten Verdichtungskammer (4) in Verbindung steht und dafür ausgelegt ist, den Austritt von verdichtetem Fluid zu ermöglichen, wobei die zweite Verdichtungskammer (4) von einem Abschnitt des Körpers des Kolbens (5) und einer ortsfesten Wand des Geräts begrenzt wird, wobei der Kolben (5) in einer Längsrichtung (A) translatorisch beweglich ist, wobei der Kolben (5) einen rohrförmigen Abschnitt aufweist, der um eine ortsfeste mittige Führung (8) herum angebracht ist, wobei ein Abschlussende der mittigen Führung (8) die ortsfeste Wand bildet, die einen Teil der zweiten Verdichtungskammer (4) begrenzt, wobei das Gerät (1) ein Dichtungssystem (10) umfasst, das zwischen der mittigen Führung (8) und dem Kolben (5) ausgebildet ist, und wobei in der Längsrichtung (A) der Translation des Kolbens (5) das Einlasssystem (2) sich an einem ersten Ende des Geräts (1) befindet, die Auslassöffnung (7) sich an einem zweiten Ende des Geräts befindet und das Überleitungssystem (6) sich zwischen dem Einlasssystem (2) und der Auslassöffnung (7) befindet, wobei die erste (3) und die zweite (4) Verdichtungskammer in die flüssige Phase des Bades (16) eingetaucht sind, wobei das Einlasssystem einen oder mehrere Schlitze (26) aufweist, die je nach der Längsposition des Kolbens (5) eine Verbindung zwischen der ersten Verdichtungskammer (3) und dem außen befindlichen Bad (16) sicherstellen oder nicht.

2. Gerät nach Anspruch 1, wobei der Schlitz oder die Schlitze (26) dazu eingerichtet sind, wenn sich der Kolben (5) an ihnen vorbeibewegt, das heißt wenn sich der Kolben (5) jenseits wenigstens eines Teils des Schlitzes oder der Schlitze (26) befindet, die Verbindung zwischen der ersten Verdichtungskammer (3) und dem äußeren Bad (16) zu ermöglichen.

3. Gerät nach Anspruch 1 oder 2, wobei in der Einlassphase, wenn sich das Volumen der ersten Verdichtungskammer (3) vergrößert, der oder die Schlitze (26) dafür ausgelegt sind zu ermöglichen, dass Gas, das eventuell in der ersten Verdichtungskammer (3) vorhanden ist, durch den oder die Schlitze (26) in das äußere Bad (16) entweicht und Platz für Flüssigkeit macht.

4. Gerät nach Anspruch 2 oder 3, wobei in der Verdichtungsphase, das heißt wenn der Kolben (5) das Volumen der ersten Verdichtungskammer (3) verkleinert, der oder die Schlitze (26) dafür ausgelegt sind, den Überschuss an Flüssigkeit entweichen zu lassen und das in der ersten Verdichtungskammer (3) eingeschlossene Flüssigkeitsvolumen auf einen bestimmten Wert zu bringen, bevor sie nicht mehr mit der ersten Verdichtungskammer (3) in Verbindung stehen.

5. Gerät nach einem der Ansprüche 1 bis 4, wobei ein Ende des Kolbens (5) eine bewegliche Verdichtungsfläche des Fluids in der ersten Verdichtungskammer (3) bildet, während der rohrförmige Abschnitt des Kolbens (5) einen beweglichen Mantel bildet, der mit dem Abschlussende der mittigen Führung (8) zusammenwirkt, um ein Verdichtungssystem für das Fluid in der zweiten Verdichtungskammer (4) zu bilden, in dem das Abschlussende der mittigen Führung (8) einen ortsfesten Kolben bildet.

6. Gerät nach einem der Ansprüche 1 bis 5, wobei in einer Betriebskonfiguration die Längsrichtung (A) der Translation des Kolbens (5) vertikal oder geneigt ist, wobei sich das Einlasssystem (2) an einem unteren Ende des Geräts (1) befindet und die Auslassöffnung (7) sich in einem Teil des Geräts befindet, der sich oberhalb des Einlasssystems (2) und vorzugsweise oberhalb des Überleitungssystems (6) befindet.

7. Gerät nach einem der Ansprüche 1 bis 6, wobei die gesamte zweite Verdichtungskammer (4) in dem rohrförmigen Abschnitt des Kolbens (5) enthalten ist.

8. Gerät nach einem der Ansprüche 1 bis 7, wobei in der Längsrichtung (A) ein erstes Ende der zweiten Verdichtungskammer (4) durch ein erstes Ende des rohrförmigen Kolbens (5) begrenzt wird und ein zweites Ende der zweiten Verdichtungskammer (4) durch das Abschlussende der mittigen Führung (8) und das Dichtungssystem (10), das zwischen der mittigen Führung (8) und dem Kolben (5) ausgebildet ist, begrenzt wird, wobei sich das Dichtungssystem (10) im Bereich des Abschlussendes der mittigen Führung (8) befindet oder an dieses angrenzt.

9. Gerät nach einem der Ansprüche 1 bis 8, wobei sich das Dichtungssystem (10), das zwischen der mittigen Führung (8) und dem Kolben (5) ausgebildet ist, nur im Bereich des zweiten Endes der zweiten Verdichtungskammer (4) und/oder jenseits der zweiten Verdichtungskammer (4) gegenüber dem ersten Ende des Geräts (1) in der Längsrichtung (A) befindet.

10. Gerät nach einem der Ansprüche 1 bis 9, wobei sich die Auslassöffnung (7) im Bereich des Abschlussendes der mittigen Führung (8) befindet, wobei das Gerät (1) eine Auslassleitung (11) für das verdichtete Gas umfasst, die ein erstes Ende, das mit der Auslassöffnung (7) verbunden ist, und ein zweites Ende, das sich gegenüber dem ersten Ende des Geräts (1) befindet, umfasst.

11. Gerät nach einem der Ansprüche 1 bis 10, wobei die erste Verdichtungskammer (3) von einem ortsfesten ersten Hohlraum (14), einem Ende des Kolbens (5) und einem Dichtungssystem (15), das zwischen dem Kolben (5) und einer Wand des ersten Hohlraums (14) ausgebildet ist, begrenzt wird.

12. Gerät nach Anspruch 11, wobei sich das Einlasssystem (2) an einem Ende des ersten Hohlraums (14) befindet, das dem zweiten Ende des Geräts (1) gegenüberliegt.

13. Gerät nach einem der Ansprüche 1 bis 12, wobei das Einlasssystem (2) mindestens eines von Folgendem umfasst: ein oder mehrere Rückschlagventile, mindestens einen Flachscheibenschieber oder ein oder mehrere Ventile, die dafür ausgelegt sind, während einer Einlassphase den Eintritt von zu verdichtendem Fluid in die erste Verdichtungskammer (3) zu gewährleisten und in einer Verdichtungsphase den Austritt von Fluid zu verhindern.

14. Gerät nach einem der Ansprüche 1 bis 13, wobei die Verdichtung des Fluids in der zweiten Verdichtungskammer (4) durch einen Hub des Kolbens (5) in Richtung des zweiten Endes des Geräts (1) bewirkt wird.

15. Station zum Befüllen von Tanks oder Leitungen mit Druckgas, umfassend eine Quelle (17) von Flüssiggas, insbesondere von flüssigem Wasserstoff, einen Entnahmekreislauf (18), der ein erstes Ende, das mit der Quelle verbunden ist, und mindestens ein zweites Ende, das dazu bestimmt ist, an einen zu befüllenden Tank (190) angeschlossen zu werden, aufweist, wobei der Entnahmekreislauf (18) ein Fluidverdichtungsgerät (1) gemäß einem der Ansprüche 1 bis 14 umfasst.

## Claims

1. Apparatus (1) for compressing fluid, having multiple compression stages and comprising a fluidtight casing (13) containing a bath (16) of cryogenic fluid comprising a liquid phase, the upper part of the casing (13) comprising a cover gas, a first compression chamber (3), a second compression chamber (4), an intake system (2) communicating with the first compression chamber (3) and configured to allow fluid that is to be compressed to be let into said first compression chamber (3), a transfer system (6) communicating with the first (3) and the second (4) compression chamber and configured to allow fluid to be transferred from the first compression chamber (3) to the second compression chamber (4), a mobile piston (5) for compressing the fluid in the first (3) and second (4) compression chambers, the apparatus (1) further comprising a discharge orifice (7) communicating with the second compression chamber (4) and configured to allow the compressed fluid to leave, the second compression chamber (4) being delimited by a portion of the body of the piston (5) and a fixed wall of the apparatus, the piston (5) being mobile in translation in a longitudinal direction (A), the piston (5) comprising a tubular portion mounted around a fixed central guide (8), a terminal end of the central guide (8) forming the fixed wall delimiting part of the second compression chamber (4), the apparatus (1) comprising a sealing system (10) formed between the central guide (8) and the piston (5) and, in the longitudinal direction (A) of translation of the piston (5), the intake system (2) being situated at a first end of the apparatus (1), the discharge orifice (7) being situated at a second end of the apparatus and the transfer system (6) being situated between the intake system (2) and the discharge orifice (7), the first (3) and the second (4) compression chambers being immersed in the liquid phase of the bath (16), the intake system comprising one or more ports (26) that either allow or do not allow communication between the first compression chamber (3) and the bath (16) outside depending on the longitudinal position of the piston (5).

2. Apparatus according to Claim 1, wherein the port or ports (26) are arranged in such a way that, when the piston (5) moves beyond them, which is to say when the piston (5) is situated beyond at least a part of the port or ports (26), they allow communication between the first compression chamber (3) and the bath (16) outside.

3. Apparatus according to Claim 1 or 2, wherein, in the intake phase, when the volume of the first compression chamber (3) is increasing, the port or ports (26) are configured to allow any gas that might be present in the first compression chamber (3) to escape via the port or ports (26) to the bath (16) outside and give up its place to liquid.

4. Apparatus according to Claim 2 or 3, wherein, during the compression phase, which is to say when the piston (5) is reducing the volume of the first compression chamber (3), the port or ports (26) are configured to allow the surplus liquid to escape and meter the volume of liquid trapped in the first compression chamber (3) to a determined value before ceasing to communicate with the first compression chamber (3).

5. Apparatus according to any one of Claims 1 to 4, wherein one end of the piston (5) forms a mobile surface for compressing the fluid in the first compression chamber (3) whereas the tubular portion of the piston (5) forms a mobile sleeve which collaborates with the terminal end of the central guide (8) to form a system for compressing the fluid in the second compression chamber (4), in which compression system the terminal end of the central guide (8) forms a fixed piston.

6. Apparatus according to any one of Claims 1 to 5, wherein, in the operating configuration, the longitudinal direction (A) of translation of the piston (5) is vertical or inclined, the intake system (2) being situated at a lower end of the apparatus (1), the discharge orifice (7) being situated in a part of the apparatus that is situated above the intake system (2) and preferably above the transfer system (6).

7. Apparatus according to any one of Claims 1 to 6, wherein the entirety of the second compression chamber (4) is contained within the tubular portion of the piston (5) .

8. Apparatus according to any one of Claims 1 to 7, wherein, in the longitudinal direction (A), a first end of the second compression chamber (4) is delimited by a first end of the tubular piston (5), and a second end of the second compression chamber (4) is delimited by the terminal end of the central guide (8) and the sealing system (10) formed between the central guide (8) and the piston (5), said sealing system (10) being situated level with or adjacent to the terminal end of the central guide (8) .

9. Apparatus according to any one of Claims 1 to 8, wherein the sealing system (10) formed between the central guide (8) and the piston (5) is situated only at the level of the second end of the second compression chamber (4) and/or beyond the second compression chamber (4) in the opposite direction to the first end of the apparatus (1) in the longitudinal direction (A).

10. Apparatus according to any one of Claims 1 to 9, wherein the discharge orifice (7) is situated at the level of the terminal end of the central guide (8), the apparatus (1) comprising a duct (11) for discharging the compressed gas and comprising a first end connected to the discharge orifice (7) and a second end situated at the opposite end to the first end of the apparatus (1).

11. Apparatus according to any one of Claims 1 to 10, wherein the first compression chamber (3) is delimited by a first fixed cavity (14), one end of the piston (5) and a sealing system (15) formed between the piston (5) and a wall of the first cavity (14).

12. Apparatus according to Claim 11, wherein the intake system (2) is situated at an end of the first cavity (14) opposite to the second end of the apparatus (1).

13. Apparatus according to any one of Claims 1 to 12, wherein the intake system (2) comprises at least one of the following: one or more nonreturn valves, at least one flat-disc valve or valves configured to admit fluid that is to be compressed into the first compression chamber (3) during an intake phase and to prevent fluid from leaving in the compression phase.

14. Apparatus according to any one of Claims 1 to 13, wherein the compression of the fluid in the second compression chamber (4) is brought about by a stroke of the piston (5) in the direction of the second end of the apparatus (1).

15. Station for filling tanks or pipes with pressurized gas, comprising a source (17) of liquefied gas, in particular liquefied hydrogen, a withdrawal circuit (18) having a first end connected to the source and at least one second end intended to be connected to a tank (190) to be filled, the withdrawal circuit (18) comprising a fluid compression apparatus (1) according to any one of Claims 1 to 14.
